# EUROPÄISCHE PATENTSCHRIFT

(11) **EP 2 652 354 B1**
(45) Veröffentlichungstag und Bekanntmachung des Hinweises auf die Patenterteilung: **24.10.2018**
(21) Anmeldenummer: 11784455.5
(22) Anmeldetag: 09.11.2011
(51) Int. Cl.: B25D 17/24, F16F 7/108

(54) **HERSTELLUNGSVERFAHREN UND TILGER**
PRODUCTION METHOD AND ABSORBER
PROCÉDÉ DE FABRICATION ET AMORTISSEUR

(30) Priorität: 13.12.2010 DE 102010062878
(43) Veröffentlichungstag der Anmeldung: 23.10.2013
(73) Patentinhaber: HILTI Aktiengesellschaft, 9494 Schaan (LI)
(72) Erfinder: STEINGRUBER, Adrian, 86830 Schwabmünchen (DE); LÜBKERT, Ernst-Rudolf, 86899 Landsberg (DE)
(74) Vertreter: Hilti Aktiengesellschaft Corporate Intellectual Property
(86) Internationale Anmeldenummer: PCT/EP2011/069755
(87) Internationale Veröffentlichungsnummer: WO 2012/079859

(56) Entgegenhaltungen:
- WO-A2-97/38237
- WO-A2-99/27274
- DE-A1-102008 062 305
- US-A- 4 800 984
- US-A1- 2008 237 949

## Beschreibung

### GEBIET DER ERFINDUNG

Die vorliegende Erfindung betrifft ein Herstellungsverfahren für einen Tilger und einen Tilger, gemäß dem Oberbegriff von Anspruch 1 und wie aus der US 2008/0237949 A1 bekannt.

### OFFENBARUNG DER ERFINDUNG

Bei einem erfindungsgemäßen Herstellungsverfahren für einen Tilger werden eine Grundplatte aus Kunststoff und eine Trägerplatte aus Kunststoff in einem Abstand parallel zu einander angeordnet. Zwischen die Trägerplatte und die Grundplatte wird ein Elastomer eingespritzt. Ein metallischer Massekörper kann mechanisch mit der Trägerplatte verbunden werden. Der Tilger kann in einer Handwerkzeugmaschine befestigt werden.

Eine Ausgestaltung sieht vor, dass mehrere Grundplatten auf einer ersten Halterung angeordnet werden, mehrere Trägerplatten auf einer zweiten Halterung angeordnet werden und das Elastomer zwischen die Grundplatten und Trägerplatten eingespritzt wird und das eingespritzte Elastomer zerschnitten wird, um die Tilger zu vereinzeln.

Erfindungsgemäß wird das Elastomer mit einem Schaumbildner eingespritzt wird.

Eine Ausgestaltung sieht vor, dass das Elastomer auf chemisch unveränderte Oberflächen aus Polyamid oder Polycarbonat der Trägerplatte und der Grundplatte aufgespritzt wird. Die Oberflächen können beispielsweise mit Wasser oder Lösungsmitteln zum Entfernen von Schmutz oder Fetten gereinigt werden. Ein chemisches Aktivieren, z.B. zum Ausbilden von Hydroxyl oder Sulfidbrücken, wird nicht ausgeführt. Insbesondere sind chemischen Verbindungen schwefelfrei.

Der erfindungsgemäße Tilger ist senkrecht zu der Arbeitsachse aus einer aus Kunststoff gebildeten Grundplatte, einem ein Elastomer aufweisenden Federkörper, einer aus steifen Kunststoff gebildeten Trägerplatte, einem ein Elastomer aufweisenden Federkörper und einem auf der Trägerplatte befestigten Massekörper, geschichtet. Die Trägerplatte ist aus einem steiferen Kunststoff als das Elastomer derart, dass bei einer Bewegung des Massekörpers nur der Federkörper und nicht die Trägerplatte verformt wird.

Der Federkörper ist mit der Grundplatte und/oder mit der Trägerplatte materialschlüssig verbunden. Erfindungsgemäß ist der Massekörper mittelbar durch die Trägerplatte an den Federkörper angebunden.

Der Massekörper kann aufgrund seiner hohen Trägheit zu einer relativen Bewegung zu der Grundplatte angeregt werden. Der zwischen das Gehäuse und den Massekörper geschaltete Federkörper übt eine Rückstellkraft auf den Massekörper in eine Ruhestellung aus. Der Federkörper hat in die drei Raumrichtungen vorzugsweise eine unterschiedliche Steifigkeit, insbesondere ist eine Steifigkeit des Federkörpers längs der Aufbaurichtung am größten und eine Anregung des Massekörpers senkrecht zu dem Federkörper am schwersten. Die geringste Steifigkeit hat der Federkörper vorzugsweise längs der Arbeitsachse, um den Tilger möglichst an die periodische Anregung des Linearantriebs anzukoppeln.

Eine Ausgestaltung sieht vor, dass ein Schwerpunkt des Massekörpers um weniger als eine Höhe des Federkörpers von einem Schwerpunkt des Federkörpers beabstandet ist. Eine flache Bauweise des Massekörpers begünstigt eine parallel Bewegung des Massekörpers zu dem Federkörper. Kipp- und Drehbewegungen des Massekörpers werden unterdrückt. Eine Abmessung des Tilgers, d.h. seine Länge, sein. Ein Schwerpunkt des Massekörpers kann innerhalb des Federkörpers liegen. Der Massekörper kann hierzu beispielsweise topfförmig über den Federkörper gestülpt sein. Eine unerwünscht drehende Kippbewegung, bei welcher die Dachfläche aus parallelen Orientierung gegenüber der Grundfläche ausgelenkt wird, wird vermieden. Eine Abmessung parallel zu der Richtung kann größer als jegliche Abmessung senkrecht zu der Richtung sein.

Der Massekörper ist durch den Federkörper längs der Arbeitsachse geführt. Aufgrund der Bewegung des Massekörpers erfährt der Federkörper eine Scherung, welche die Dachfläche parallel zu der Grundfläche verschiebt. Die Besonderheit des Tilgers ist sein sehr kompakter Aufbau und geringer Raumbedarf für den schwingenden Massekörper. Kippbewegung des Federkörpers sind vorzugsweise unterdrückt. Der Federkörper kann mit zwei gegenüberliegenden ebenen, parallelen Flächen ausgebildet sein, an welchen die Grundplatte bzw. die Trägerplatte befestigt sind.

Eine Ausgestaltung sieht vor, dass der Massekörper kraft- und/oder formschlüssig mit der Trägerplatte verbunden ist. Von der Trägerplatte können mehrere Zapfen in die Aufbaurichtung vorstehen und der Massekörper formschlüssig auf den Zapfen aufgesetzt sein.

Erfindungsgemäß ist das Elastomer aus der Gruppe geschlossenporig geschäumter Polyurethane Der Träger kann aus einem Kunststoff aus den Gruppen der Polyamide und Polycarbonate ausgewählt sein.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Handwerkzeugmaschine
- Fig. 2: einen Tilger in Seitenansicht,
- Fig. 3: den Tilger von Fig. 2 in ausgelenkter Stellung
- Fig. 4: den Tilger von Fig. 2 in Explosionsansicht.
- Fig. 5: ein weiterer Tilger;
- Fig. 6 und 7: Halterungen

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

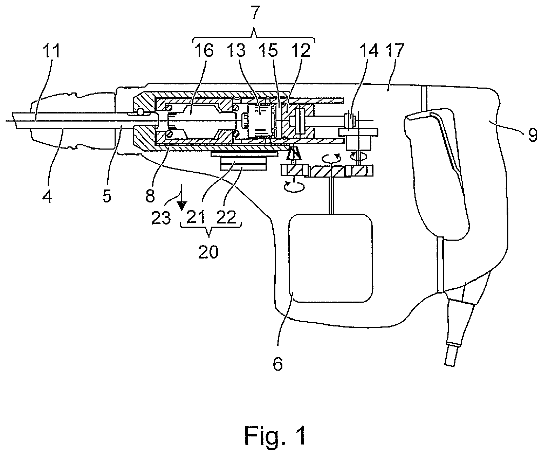

Fig. 1 zeigt schematisch einen Bohrhammer **3.** Der Bohrhammer **3** hat eine Werkzeugaufnahme **4,** in welche als Werkzeug ein Bohrmeißel **5** eingesetzt werden kann. Einen primären Antrieb des Bohrhammers **3** bildet ein Motor **6,** welcher ein Schlagwerk **7** und eine Abtriebswelle **8** antreibt. Ein Anwender kann den Bohrhammer **3** mittels eines Handgriffs **9** führen und mittels eines Systemschalters **10** den Bohrhammer **3** in Betrieb nehmen. Im Betrieb dreht der Bohrhammer **3** den Bohrmeißel **5** kontinuierlich um eine Arbeitsachse **11** und kann dabei den Bohrmeißel **5** längs der Arbeitsachse **11** in einen Untergrund schlagen.

Das Schlagwerk **7** ist beispielsweise ein pneumatisches Schlagwerk **7.** Ein Erreger **12** und ein Schläger **13** sind in dem Schlagwerk **7** längs der Arbeitsachse **11** beweglich geführt. Der Erreger **12** ist über einen Exzenter **14** oder einen Taumelfinger an den Motor **6** angekoppelt und zu einer periodischen, linearen Bewegung gezwungen. Eine Luftfeder gebildet durch eine pneumatische Kammer **15** zwischen Erreger **12** und Schläger **13** koppelt eine Bewegung des Schlägers **13** an die Bewegung des Erregers **12** an. Der Schläger **13** kann direkt auf ein hinteres Ende des Bohrmeißels **5** aufschlagen oder mittelbar über einen im Wesentlichen ruhenden Zwischenschläger **16** einen Teil seines Impuls auf den Bohrmeißel **5** übertragen. Das Schlagwerk **7** und vorzugsweise die weiteren Antriebskomponenten sind innerhalb eines Maschinengehäuses **17** angeordnet.

Der längs der Arbeitsachse **11** bewegte Bohrmeißel **5** und das Schlagwerk **7** führen zu Rückschlägen, die der Anwender mit dem Handgriff **9** auffängt. Eine Dämpfung der Spitzenbelastung erfolgt durch einen Tilger **20.** Der Tilger **20** hat einen Federkörper **21** und einen Massekörper **22,** der auf dem Federkörper **21** befestigt ist. Der Massekörper **22** ist entlang der Arbeitsachse **11** aus einer Ruhestellung heraus beweglich angeordnet. In der Ruhestellung übt der Federkörper **21** auf den Massekörper **22** keine Kräfte längs der Arbeitsachse **11** aus. Aufgrund seiner Trägheit wird der Massekörper **22** durch die Vibrationen des Maschinengehäuses **17** längs der Arbeitsachse **11** ausgelenkt. Der Federkörper **21** wird bei der Auslenkung geschert und übt daraufhin eine Rückstellkraft längs der Arbeitsachse **11** in Richtung zu der Ruhestellung aus. Eine Federkonstante des Federkörpers **21** entlang der Arbeitsachse **11** und eine Masse des Massekörpers **22** sind an die Periodizität der Rückschläge des Schlagwerks **7** derart angepasst, dass die Rückschläge den Tilger **20** vorzugsweise resonant anregen.

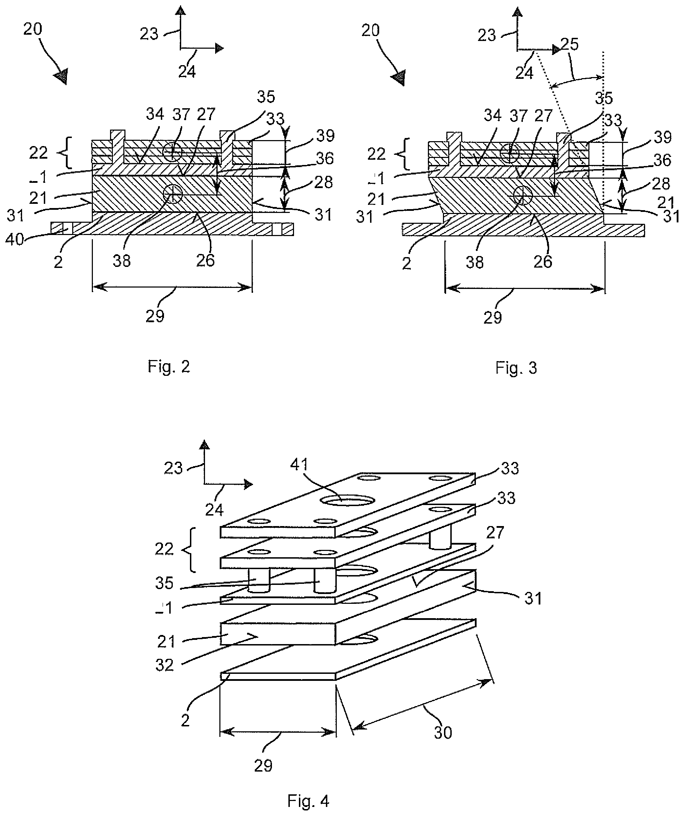

Fig. 2, Fig. 3 und Fig. 4 zeigen detaillierter einen beispielhaften Aufbau des Tilgers **20.** Fig. 2 zeigt den Massekörper **22** in seiner Ruhestellung, Fig. 3 in einer ausgelenkten Stellung, Fig. 4 eine Explosionsdarstellung des Tilgers **20.**

Der Tilger **20** ist im Wesentlichen als eine Abfolge mehrerer Schichten aufgebaut, welche entlang einer Aufbaurichtung **23** aufeinander gestapelt sind. Eine Grundplatte **2** dient der Befestigung des Tilgers **20** in dem Bohrhammer **3.** Auf der Grundplatte **2** ist der Federkörper **21,** auf dem Federkörper **21** eine Trägerplatte **1** und auf der Trägerplatte **1** der Massekörper **22** befestigt.

Der Aufbau des Tilgers **20** ist ausgelegt, den Massekörper **22** im Wesentlichen parallel zu der Grundplatte **2** entlang einer Tilgungsachse **24** und senkrecht zu der Aufbaurichtung **23** zu führen. Bei einer Auslenkung des Massekörpers **22** entlang der Tilgungsachse **24** wird der Federkörper **21** um einen Scherwinkel **25** geschert. Eine Kippbewegung des Massekörpers **22** gegenüber der Aufbaurichtung **23** ist durch eine Formgebung des Tilger **20** weitgehend unterbunden.

Der Federkörper **21** ist ein, vorzugsweise zusammenhängender, Block aus einem Elastomer. Der elastisch verformbare Kunststoff ist ein Thermoplast, besonders geeignet sind geschlossenporige Schäume aus Polyurethan. Eine Alternative ist Silikonkautschuk.

Der beispielhaft als Quader dargestellte Federkörper **21** hat eine ebene Grundfläche **26,** welche längs der Aufbaurichtung **23** von einer gegenüberliegenden parallelen, ebenen Dachfläche **27** beabstandet ist. Eine Höhe **28** des Federkörpers **21,** d.h. seine Abmessung längs der Aufbaurichtung **23,** ist geringer als eine Länge **29,** d.h. Abmessung längs der Arbeitsachse **11.** Ein Verhältnis der Höhe **28** zu der Länge **29** liegt beispielsweise im Bereich zwischen 0,1 bis 0,4. Eine Breite **30** des Federkörpers **21,** d.h. eine Abmessung senkrecht zur Arbeitsachse **11** und senkrecht zur Aufbaurichtung **23,** ist größer als die Höhe **28** und vorzugsweise ebenfalls größer als die Länge **29,** z.B. um wenigstens 50 % größer als die Länge **29.** Parallel oder teilweise parallel zur Aufbaurichtung **23** orientierte Seitenflächen **31** des Federkörpers **21** haben einen deutlich geringeren Flächeninhalt als die senkrecht orientierten Grundfläche **26** und Dachfläche **27.** Der flache Aufbau begünstigt eine Scherbewegung und übt große Gegenkräfte gegen ein Taumeln des Massekörpers **22** aus.

Statt der beispielhaft quadrischen Gestalt des Federkörpers **21** können die gegenüberliegende Grundfläche **26** und Dachfläche **27** eine andere Form aufweisen, z.B. sechseckig, kreisförmig, also der Block eine andere prismatische Form aufweisen. Weiters können die Seitenflächen **31** senkrecht zur Tilgungsachse **24** und insbesondere die parallel Seitenflächen **32** parallel zur Tilgungsachse **24** gegenüber der Aufbaurichtung **23** geneigt sein. Die senkrecht zur Aufbaurichtung **23** angeordneten Grundfläche **26** und Dachfläche **27** sind vorzugsweise eben.

Die Trägerplatte **1** ist aus einem steifen Kunststoff, beispielsweise aus Polyamid oder Polycarbonat. Besonders bevorzugt ist eine Kombination aus Polyamid für die Trägerplatte **1** und ein geschlossenporiger Schaum aus Polyurethan für den Federkörper **21.** Der Federkörper **21** und die Trägerplatte **1** können in einem Spritzgussverfahren materialschlüssig miteinander verbunden werden, wodurch der Kunststoff des Federkörpers **21** sich chemisch mit dem Kunststoff der Trägerplatte **1** verbindet. Die Trägerplatte **1** kann gereinigt werden, bevor der Federkörper **21** aufgespritzt wird. Weitere vorbereitende Behandlungsschritte sind nicht notwendig, z.B. ein Aufbringen eines Primers auf die Trägerplatte wie beim Vulkanisieren. Alternativ kann die Trägerplatte **1** auf dem Federkörper **21** aufgeklebt werden.

Die Grundplatte **2** kann aus dem gleichen Kunststoff wie die Trägerplatte **1** ausgewählt werden. In einer Ausgestaltung hat die Grundplatte **2** einen Eisenkern, der mit dem Kunststoff beschichtet ist. Die Grundfläche **26** des Federkörpers **21** ist vorzugsweise mit der Grundplatte **2** materialschlüssig verbunden, z.B. durch einen Klebstoff oder Aufspritzen des Federkörpers **21** auf die Grundplatte **2.**

Die gegenüberliegenden Grundfläche **26** und Dachfläche **27** des Federkörpers **21** berühren die Grundplatte **2** bzw. die Trägerplatte **1.** Die kleineren Seitenflächen **31, 32** sind, vorzugsweise vollständig, freiliegend, insbesondere die senkrecht zur Arbeitsachse **11** orientierten Seitenflächen **31.**

Die Trägerplatte **1** dient der Anbindung des Massekörpers **22** an den Federkörper **21.** Ein Umfang der Trägerplatte **1** ist vorzugsweise deckungsgleich mit der Dachfläche **27** des Federkörpers **21.** Eine Einleitung der Kräfte von dem elastischen Federkörper **21** in die steifen Trägerplatte **1** erfolgt gleichmäßig über die gesamte Dachfläche **27.** Querschnitte des Massekörpers **22** parallel zur Dachfläche sind der Dachfläche **27** gleich oder liegen innerhalb der Dachfläche **27.**

Der Massekörper **22** ist aus Eisen oder einem anderen Material vergleichbarer oder größerer Dichte. Eine Masse des Massekörpers **22** beträgt wenigstens das Doppelte einer Masse des Federkörpers **21.** Der Massekörper **22** kann ein einzelner Block oder vorzugsweise aus mehreren gestanzten Blechen **33** zusammengesetzt sein.

Eine Befestigung des Massekörpers **22** auf der Trägerplatte **1** erfolgt vorzugsweise über einen Formschluss oder Kraftschluss. Beispielsweise sind auf der von dem Federkörper **21** abgewandten Seite **34** der Trägerplatte **1** Noppen oder Zapfen **35** vorgesehen. Der Massekörper **22** kann mit den Zapfen **35** verrastet sein. Insbesondere kann der Massekörper **22** aus mehreren gestanzten Blechen **33** zusammengesetzt werden, welche nacheinander auf die Zapfen **35** aufgeschoben sind. Eine Spitze des Zapfens **35** kann zu einem Knopf zerdrückt sein.

Der Massekörper **22** ist berührungsfrei zu dem Federkörper **21,** d.h. er hat keinen unmittelbaren Kontakt mit dem Federkörper **21.** Die Abmessungen des Massekörpers **22** senkrecht zur Aufbaurichtung **23,** insbesondere die Länge **29** parallel zur Tilgungsachse **23,** sind gleich den entsprechenden Abmessungen des Federkörpers **21.**

Ein Abstand **36** eines Schwerpunkts **37** des Massekörpers **22** von einem Schwerpunkt **38** des Federkörpers **21** ist vorzugsweise geringer als die Höhe **28** des Federkörpers **21.** Eine Höhe **39** des Massekörpers **22** kann geringer als die Höhe **28** des Federkörpers **21** sein.

Die Grundplatte **2** dient der Befestigung des Tilgers **20** in oder an der Handwerkzeugmaschine **3.** Seitlich über die anderen Komponenten des Tilgers **20** hinausstehende Flügel **40** der Grundplatte **2** können beispielsweise mit Bohrungen **41** oder Gewinden versehen sein.

Eine durchgehende Öffnung **42** kann längs der Aufbaurichtung **23** sich von der Grundplatte **2** bis durch den Massekörper **22** erstrecken. Die Öffnung **42** weist in der Grundplatte **23** einen geringeren Durchmesser als in dem Federkörper **21** auf. Ein Schraubenkopf einer Schraube kann innerhalb des Federkörpers **21** angeordnet sein, um die Grundplatte **23** und damit den gesamten Tilger **20** an einem Untergrund zu befestigen.

Der Tilger **20** ist vorzugsweise in dem Maschinengehäuse **17** angeordnet. Eine Befestigung des Tilgers **20** kann beispielsweise an dem Maschinengehäuse **17** oder an dem Schlagwerk **7** erfolgen. Die Aufbaurichtung **23** ist vorzugsweise unter einem Winkel **43** größer 80 Grad zu der Arbeitsachse **11** geneigt, vorzugsweise senkrecht zur Arbeitsachse **11.** Der Tilger **20** kann auch in anderen Handwerkzeugmaschinen, z.B. einer Stichsäge oder einer Säbelsäge eingebaut sein.

Eine weitere Dämpfung der Rückschläge kann durch eine federnde Aufhängung des Handgriffs **9** an dem Maschinengehäuse **17** erfolgen. Die federnde Aufhängung dämpft eine Übertragung der Vibrationen von dem Maschinengehäuse **17** auf den Handgriff **9.**

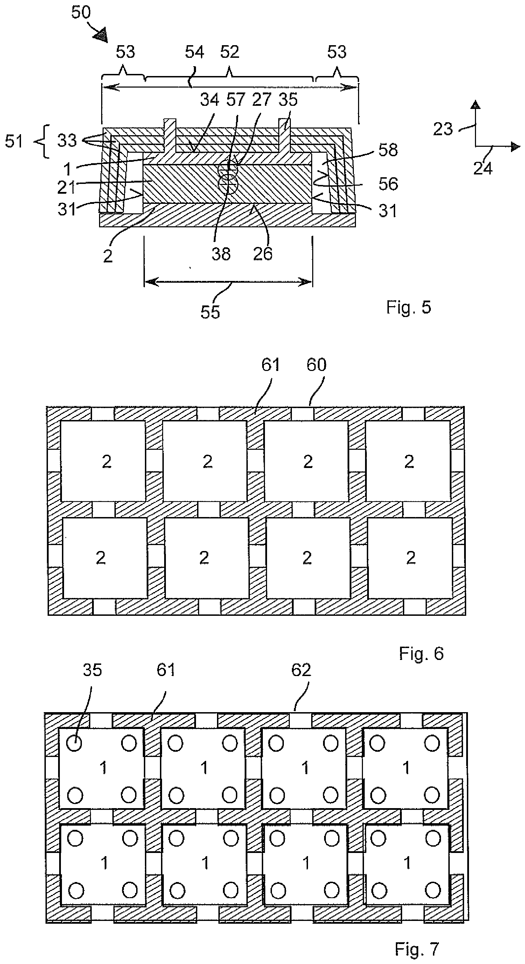

Fig. 5 zeigt eine weitere Ausgestaltung eines Tilger **50** mit einem Federkörper **21** und einem Massekörper **51.** Der Tilger **50** ist analog dem Tilger **20** aus mehreren in entlang der Aufbaurichtung **23** aufeinander gestapelten Elementen aufgebaut. Auf der Grundplatte **2** ist der Federkörper **21,** auf dem Federkörper **21** eine Trägerplatte **1** und auf der Trägerplatte **1** der Massekörper **51** befestigt. Der Federkörper **21,** die Grundplatte **2** und die Trägerplatte **1** können gemäß der vorherig beschriebenen Ausführungsformen ausgebildet sein.

Der Massekörper **51** hat einen mittleren Abschnitt **52,** welcher auf der Trägerplatte **1** aufliegt. Ein Rand **53** des Massekörpers **51** überragt seitlich, d.h. in wenigstens eine Richtung senkrecht zur Aufbaurichtung **23,** den Federkörper **21.** Bei dem beispielhaft dargestellten Tilger **50** ist eine Breite **54** des Massekörpers **51** größer als eine Breite **55** des Federkörpers **21.** Die Breite bezeichne eine Abmessung senkrecht zur Tilgungsachse **23** und senkrecht zur Aufbaurichtung **23.** Der Rand **53** ist vorzugsweise gegenüber dem mittleren Abschnitt **52** und in Richtung zu dem Federkörper **21** geneigt. Der Massekörper **51** ist schalenförmig mit einer dem Federkörper **21** zugewandten konkaven Fläche **56** ausgebildet. Aufgrund des angewinkelten Randes **53** kann der Schwerpunkt **57** des Massekörpers **51** innerhalb des Federkörpers **21** liegen. In einer Variante fallen der Schwerpunkt **38** des Federkörpers **21** und der Schwerpunkt **57** des Massekörpers **51** zusammen.

Die Seitenflächen **31** des Federkörpers **21** sind von dem Rand **53** beabstandet, z.B. durch einen Hohlraum **58,** weshalb der Massekörper **59** die aufgrund seiner Trägheit resultierenden Kräfte nur über die Dachfläche **27** des Federkörpers **21** einleiten kann.

Ein Herstellungsverfahren für den Tilger **20** sieht vor zunächst Grundplatten **2** und Trägerplatten **1** herzustellen. Diese Platten können beispielsweise aus Polyamid oder Polycarbonat in einem Spritzgussverfahren hergestellt werden. Die Trägerplatten **1** erhalten dabei die Zapfen **35** oder andere Verrastungselemente. Mehrere der Grundplatten **2** werden nebeneinander auf einer ersten Halterung **60** angeordnet (Fig. 6). Die erste Halterung **60** kann Noppen **61** aufweisen, welche die Grundplatten **2** in definierten Abständen halten. Auf einer zweiten Halterung **62** werden mehrere der Trägerplatten **1** angeordnet (Fig. 7). Die beiden Halterung **60, 62** werden einander parallel, gegenüberliegend in einem Abstand ausgerichtet, welcher der späteren Höhe **28** des Federkörpers **21** entspricht. Jeder Grundplatte **2** liegt dabei eine Trägerplatte 1 gegenüber.

Zwischen die beiden Halterung **60, 62** wird der Federkörper **21** als geschlossenporiger Schaum aus z.B. Polyurethan, eingebracht. Das Polyurethan wird zusammen mit einem Schaumbildner in den Zwischenraum eingespritzt. Der Schaum reagiert chemisch mit dem Polyamid oder Polycarbonat der Platten **2, 1.** Ein Vorbehandeln, z.B. chemisches Aktivieren der Platten mittels eines Primers ist nicht vorgesehen. Bei einer Variante wird ein Kautschuk als Material für den Federkörper **21** eingespritzt.

Nachdem der Schaum ausgehärtet ist, wird der Block aus Grundplatten, Trägerplatten und dem festen Schaum aus den Halterungen **60, 62** entnommen. Eine Säge, z.B. eine Wasserstrahlsäge, schneidet den Schaum entlang der Kontur der Grundplatten **2** oder Trägerplatten **1,** um den Block in mehrere Grundkörper für den Tilger **20** zu vereinzeln.

Anschließend werden die Massekörper **22** mechanisch mit der Trägerplatte **1** verbunden. Der Massekörper **22** hat z.B. Bohrungen, mit welchen er auf die Zapfen **35** aufgesetzt wird. Der Massekörper **22** kann durch einen Stapel aus mehreren Blechen **33** aufgebaut werden. Danach kann ein Stempelwerkzeug die Zapfen **35** quetschen, um einen Nietkopf auszubilden.

Bei einer Variante des Herstellungsverfahren wird zunächst eine erste Platte zusammenhängender Grundplatten **2** hergestellt. Die erste Platte ist wiederholt mit der Form der Grundplatten **2** strukturiert. Gleichermaßen kann eine zweite Platte zusammenhängender Trägerplatten **1** hergestellt werden, indem die Gestalt der Trägerplatten **1** sich auf der zweiten Platte mehrfach wiederholt. Die Trägerplatten **1** können beispielsweise durch dünne Stege miteinander verbunden sein. Die erste Platte und die zweite Platte werden einander gegenüber angeordnet. Der Schaum für den Federkörper **21** wird zwischen die Platten eingespritzt. Anschließend werden der Block aus den beiden Platten und dem Schaum in einzelne Grundkörper für Tilger **20** zersägt und der Massekörper **22** befestigt.

## Patentansprüche

1. Herstellungsverfahren für einen Tilger (**20**), bei welchem eine Grundplatte (**2**) aus Kunststoff und eine Trägerplatte (**1**) aus Kunststoff in einem Abstand parallel zu einander angeordnet werden, zwischen die Trägerplatte (**1**) und die Grundplatte (**2**) ein Elastomer eingespritzt für einen Federkörper (**21**) wird und ein metallischer Massekörper (**22**) kraft- und/oder formschlüssig auf einer dem Federkörper (**21**) abgewandten Seite der Trägerplatte (**1**) befestigt wird, **dadurch gekennzeichnet, dass** das Elastomer mit einem Schaumbildner eingespritzt wird.

2. Herstellungsverfahren nach Anspruch 1, **dadurch gekennzeichnet, dass** mehrere Grundplatten (**2**) auf einer ersten Halterung (**60**) angeordnet werden, mehrere Trägerplatten (**1**) auf einer zweiten Halterung (**62**) angeordnet werden und das Elastomer zwischen die Grundplatten (**2**) und Trägerplatten (**1**) eingespritzt wird und das eingespritzte Elastomer zerschnitten wird, um die Tilger (**20**) zu vereinzeln.

3. Herstellungsverfahren nach einem der Ansprüche 1 bis 2, **dadurch gekennzeichnet, dass** das Elastomer auf chemisch unveränderte Oberflächen aus Polyamid oder Polycarbonat der Trägerplatte (**1**) und der Grundplatte (**2**) aufgespritzt wird.

4. Tilger (**20**), der in einer Aufbaurichtung (**23**) aus einer aus Kunststoff gebildeten Grundplatte (**2**), einem ein Elastomer aufweisenden Federkörper (**21**), einer aus Kunststoff gebildeten Trägerplatte (**1**), einem ein Elastomer aufweisenden Federkörper (**21**) und einem auf der Trägerplatte (**1**) befestigten Massekörper (**22**), geschichtet ist, wobei der Federkörper (**21**) mit der Grundplatte (**2**) und/oder mit der Trägerplatte (**1**) angespritzt, materialschlüssig verbunden ist, **dadurch gekennzeichnet, dass** das Elastomer aus der Gruppe geschlossenporig geschäumter Polyurethane ist.

5. Tilger nach Anspruch 4, **dadurch gekennzeichnet, dass** der Träger aus einem Kunststoff aus den Gruppen der Polyamide und Polycarbonate ausgewählt ist.

6. Tilger nach einem der Ansprüche 4 oder 5, **dadurch gekennzeichnet, dass** der Massekörper kraft- und/oder formschlüssig mit der Trägerplatte (**1**) verbunden ist.

7. Tilger nach einem der Ansprüche 4 bis 6, **dadurch gekennzeichnet, dass** ein Schwerpunkt des Massekörpers (**22**) um weniger als eine Höhe (**28**) des Federkörpers (**21**) von einem Schwerpunkt des Federkörpers (**21**) beabstandet ist.

8. Tilger nach einem der Ansprüche 4 bis 7, **dadurch gekennzeichnet, dass** ein Schwerpunkt des Massekörpers (**22**) innerhalb des Federkörpers (**21**) liegt.

9. Tilger nach einem der Ansprüche 4 bis 8, **dadurch gekennzeichnet, dass** eine Abmessung des Tilgers (**20**) längs der Aufbaurichtung geringer als eine Abmessung des Tilgers (**20**) längs der Arbeitsachse (**11**) ist.

10. Tilger nach einem der Ansprüche 4 bis 9, **dadurch gekennzeichnet, dass** der Federkörper (**21**) an einer Grundfläche mit der Grundplatte und an einer Dachfläche mit der Trägerplatte verbunden ist und die Grundfläche parallel zu der Dachfläche ist.

11. Tilger nach einem der Ansprüche 4 bis 10, **dadurch gekennzeichnet, dass** von der Trägerplatte (**1**) mehrere Zapfen (**35**) in die Aufbaurichtung (**23**) vorstehen und der Massekörper (**22**) formschlüssig auf den Zapfen (**35**) aufgesetzt ist.

## Claims

1. Production method for an absorber **(20),** in which a base plate **(2)** made of plastic and a carrier plate **(1)** made of plastic are arranged parallel to each other at a distance, an elastomer is injected between the carrier plate **(1)** and the base plate **(2)** for a bellows **(21)** and a metallic mass body **(22)** is fastened to a side of the carrier plate **(1)** turned away from the bellows **(21)** in a force fitting and/or form fitting way, **characterised in that** the elastomer is injected with a foaming agent.

2. Production method according to claim 1, **characterised in that** several base plates **(2)** are arranged on a first holder **(60),** several carrier plates **(1)** are arranged on a second holder **(62)** and the elastomer is injected between the base plates **(2)** and carrier plates **(1)** and the elastomer injected is cut in order to separate the absorbers **(20).**

3. Production method according to claims 1 to 2, **characterised in that** the elastomer is sprayed on chemically unchanged surfaces of the carrier plate **(1)** and the base plate **(2)** made of polyamide or polycarbonate.

4. Absorber **(20),** which is laminated in the direction of construction **(23)** with a base plate **(2)** made of a plastic, a bellows **(21)** that has an elastomer, a carrier plate **(1)** made of plastic, a bellows **(21)** that has an elastomer and mass body **(22)** fastened to the carrier plate **(1),** in which the bellows **(21)** is moulded and connected to the base plate **(2)** and/or the carrier plate **(1)** in a material fitting way, **characterised in that** the elastomer is from the group of closed-pore foamed polyurethanes.

5. Absorber according to claim 4, **characterised in that** the carrier is selected from a plastic from the groups of polyamides and polycarbonates.

6. Absorber according to one of claims 4 or 5, **characterised in that** the mass body is connected to the carrier plate **(1)** in a force fitting and/or form fitting way.

7. Absorber according to one of claims 4 to 6, **characterised in that** a centre of gravity of the mass body **(22)** is at a distance from a centre of gravity of the bellows **(21)** by less than a height **(28)** of the bellows **(21).**

8. Absorber according to one of claims 4 to 7, **characterised in that** a centre of gravity of the mass body **(22)** lies within the bellows **(21).**

9. Absorber according to one of claims 4 to 8, **characterised in that** a dimension of the absorber **(20)** along the direction of construction is smaller than a dimension of the absorber **(20)** along the working axis **(11).**

10. Absorber according to one of claims 4 to 9, **characterised in that** the bellows **(21)** is connected to a floor area with the base plate and to a roof area with the carrier plate and the floor area is parallel to the roof area.

11. Absorber according to one of claims 4 to 10, **characterised in that** several pins **(35)** project from the carrier plate **(1)** in the direction of construction **(23)** and the mass body **(22)** is set on the pins **(35)** in a form fitting way.

## Revendications

1. Procédé de fabrication pour un amortisseur (20), dans lequel une plaque de base (2) en matière plastique et une plaque de support (1) en matière plastique sont agencées à une certaine distance parallèlement l'une à l'autre, un élastomère pour un élément à ressort (21) est injecté entre la plaque de support (1) et la plaque de base (2), et un élément massif métallique (22) est fixé par un assemblage à force et/ou par assemblage de formes sur un côté de la plaque de support (1) opposé à l'élément à ressort (21), **caractérisé en ce que** l'élastomère est injecté avec un agent moussant.

2. Procédé de fabrication selon la revendication 1, **caractérisé en ce que** plusieurs plaques de base (2) sont agencées sur un premier support (60), plusieurs plaques de support (1) sont agencées sur un second support (62) et l'élastomère est injecté entre les plaques de base (2) et les plaques de support (1), et l'élastomère injecté est découpé afin de séparer les amortisseurs (20).

3. Procédé de fabrication selon l'une des revendications 1 à 2, **caractérisé en ce que** l'élastomère est injecté sur des surfaces chimiquement non modifiées en polyamide ou en polycarbonate de la plaque de support (1) et de la plaque de base (2).

4. Amortisseur (20) disposé en couches dans une direction de montage (23) et constitué d'une plaque de base (2) formée en matière plastique, d'un élément à ressort (21) comportant un élastomère, d'une plaque de support (1) formée en matière plastique, d'un élément à ressort (21) comportant un élastomère et d'un élément massif (22) fixé sur la plaque de support (1), dans lequel l'élément à ressort (21) est moulé par injection avec la plaque de base (2) et/ou avec la plaque de support (1) et est relié par liaison de matière, **caractérisé en ce que** l'élastomère est choisi parmi le groupe constitué d'un polyuréthane en mousse à cellules fermées.

5. Amortisseur selon la revendication 4, **caractérisé en ce que** le support est choisi parmi une matière plastique du groupe des polyamides et des polycarbonates.

6. Amortisseur selon l'une des revendications 4 ou 5, **caractérisé en ce que** l'élément massif est relié à la plaque de support (1) par assemblage à force et/ou par assemblage de formes.

7. Amortisseur selon l'une des revendications 4 à 6, **caractérisé en ce qu'**un centre de gravité de l'élément massif (22) est espacé d'un centre de gravité de l'élément à ressort (21) d'une distance inférieure à une hauteur (28) de l'élément à ressort (21).

8. Amortisseur selon l'une des revendications 4 à 7, **caractérisé en ce qu'**un centre de gravité de l'élément massif (22) se situe à l'intérieur de l'élément à ressort (21).

9. Amortisseur selon l'une des revendications 4 à 8, **caractérisé en ce qu'**une dimension de l'amortisseur (20) le long de la direction de montage est inférieure à une dimension de l'amortisseur (20) le long de l'axe de travail (11).

10. Amortisseur selon l'une des revendications 4 à 9, **caractérisé en ce que** l'élément à ressort (21) est relié à la plaque de base au niveau d'une surface inférieure et à la plaque de support au niveau d'une surface supérieure, et la surface inférieure est parallèle à la surface supérieure.

11. Amortisseur selon l'une des revendications 4 à 10, **caractérisé en ce que** plusieurs goupilles (35) font saillie à partir de la plaque de support (1) dans la direction de montage (23) et l'élément massif (22) est posé sur les goupilles (35) par assemblage de formes.
